# EUROPÄISCHE PATENTANMELDUNG

(11) **EP 3 578 309 A1**
(43) Veröffentlichungstag der Anmeldung: **11.12.2019**
(21) Anmeldenummer: 18176194.1
(22) Anmeldetag: 06.06.2018
(51) Int. Cl.: B25C 1/06

(54) **SETZGERÄT**

(71) Anmelder: HILTI Aktiengesellschaft, 9494 Schaan (LI)
(72) Erfinder: Dittrich, Tilo, 6800 Feldkirch (AT); Sperrfechter, Thomas, 7214 Grüsch (CH); Heeb, Norbert, 9470 Buchs (CH)
(74) Vertreter: Hilti Aktiengesellschaft Corporate Intellectual Property

(57) **Zusammenfassung**

Setzgerät 10 zum Eintreiben von Befestigungselementen 30 in einen Untergrund, aufweisend eine Aufnahme 20, welche dafür vorgesehen ist, ein Befestigungselement aufzunehmen, ein Eintreibelement 60, welches dafür vorgesehen ist, ein in der Aufnahme aufgenommenes Befestigungselement entlang einer Setzachse A in den Untergrund zu befördern, einen Antrieb, welcher dafür vorgesehen ist, das Eintreibelement entlang der Setzachse auf das Befestigungselement zu anzutreiben, wobei der Antrieb einen elektrischen Kondensator 300, einen an dem Eintreibelement angeordneten Kurzschlussläufer 90 und eine Erregerspule 100 aufweist, welche bei einer Entladung des Kondensators mit Strom durchflossen wird und ein Magnetfeld erzeugt, welches das Eintreibelement auf das Befestigungselement zu beschleunigt, wobei das Setzgerät weiterhin einen weichmagnetischen Rahmen 430, in welchen die Erregerspule eingebettet ist, und eine Stützstruktur 440 umfasst, wobei die Stützstruktur zumindest während der Entladung des Kondensators eine bezüglich der Setzachse radial nach innen gerichtete Vorspannkraft auf den weichmagnetischen Rahmen ausübt.

## Beschreibung

Die vorliegende Erfindung betrifft ein Setzgerät zum Eintreiben von Befestigungselementen in einen Untergrund.

Derartige Setzgeräte weisen üblicherweise eine Aufnahme für ein Befestigungselement auf, aus welcher heraus ein darin aufgenommenes Befestigungselement entlang einer Setzachse in den Untergrund befördert wird. Ein Eintreibelement wird hierfür von einem Antrieb entlang der Setzachse auf das Befestigungselement zu angetrieben.

Aus der US 6,830,173 B2 ist ein Setzgerät mit einem Antrieb für ein Eintreibelement bekannt. Der Antrieb weist einen elektrischen Kondensator und eine Spule auf. Zum Antreiben des Eintreibelements wird der Kondensator über die Spule entladen, wodurch eine Lorentz-Kraft auf das Eintreibelement wirkt, so dass das Eintreibelement auf einen Nagel zu bewegt wird.

Die Aufgabe der vorliegenden Erfindung liegt darin, ein Setzgerät der vorgenannten Art bereitzustellen, bei dem ein hoher Wirkungsgrad und/oder eine gute Setzqualität gewährleistet ist.

Die Aufgabe ist gelöst bei einem Setzgerät zum Eintreiben von Befestigungselementen in einen Untergrund, aufweisend eine Aufnahme, welche dafür vorgesehen ist, ein Befestigungselement aufzunehmen, ein Eintreibelement, welches dafür vorgesehen ist, ein in der Aufnahme aufgenommenes Befestigungselement entlang einer Setzachse in den Untergrund zu befördern, einen Antrieb, welcher dafür vorgesehen ist, das Eintreibelement entlang der Setzachse auf das Befestigungselement zu anzutreiben, wobei der Antrieb einen elektrischen Kondensator, einen an dem Eintreibelement angeordneten Kurzschlussläufer und eine Erregerspule aufweist, welche bei einer Entladung des Kondensators mit Strom durchflossen wird und ein Magnetfeld erzeugt, welches das Eintreibelement auf das Befestigungselement zu beschleunigt, wobei das Setzgerät weiterhin einen weichmagnetischen Rahmen, in welchen die Erregerspule eingebettet ist, und eine Stützstruktur, wie Stützelement, umfasst, wobei die Stützstruktur zumindest während der Entladung des Kondensators eine bezüglich der Setzachse radial nach innen gerichtete Vorspannkraft auf den weichmagnetischen Rahmen ausübt. Das Setzgerät ist dabei bevorzugt handgeführt einsetzbar. Alternativ ist das Setzgerät stationär oder halbstationär einsetzbar.

Unter einem Kondensator im Sinne der Erfindung ist ein elektrisches Bauelement zu verstehen, welches elektrische Ladung und die damit verbundene Energie in einem elektrischen Feld speichert. Insbesondere weist ein Kondensator zwei elektrisch leitende Elektroden auf, zwischen denen sich das elektrische Feld aufbaut, wenn die Elektroden elektrisch unterschiedlich geladen werden. Unter einem Befestigungselement im Sinne der Erfindung ist beispielsweise ein Nagel, ein Stift, eine Klammer, ein Clip, ein Bolzen, insbesondere Gewindebolzen oder dergleichen zu verstehen.

Eine vorteilhafte Ausführungsform ist dadurch gekennzeichnet, dass die Stützstruktur innerhalb einer Ebene senkrecht zur Setzachse von allen Seiten eine Vorspannkraft auf den weichmagnetischen Rahmen ausübt.

Eine vorteilhafte Ausführungsform ist dadurch gekennzeichnet, dass die Stützstruktur in Richtung der Setzachse eine Vorspannkraft auf den weichmagnetischen Rahmen ausübt.

Eine vorteilhafte Ausführungsform ist dadurch gekennzeichnet, dass die Stützstruktur den weichmagnetischen Rahmen im Wesentlichen umschliesst. Bevorzugt ist die Stützstruktur bezüglich der Setzachse in umlaufender Richtung elastisch gedehnt. Besonders bevorzugt ist der weichmagnetische Rahmen in eine Aussparung der Stützstruktur eingesetzt. Ebenfalls besonders bevorzugt ist die Stützstruktur mittels eines Spannelements, beispielsweise einer Schraube, um den weichmagnetischen Rahmen gespannt.

Eine vorteilhafte Ausführungsform ist dadurch gekennzeichnet, dass die Stützstruktur an den weichmagnetischen Rahmen angeformt ist, bevorzugt mittels eines Spritzgussverfahrens.

Eine vorteilhafte Ausführungsform ist dadurch gekennzeichnet, dass der weichmagnetische Rahmen eine bezüglich der Setzachse radial nach aussen weisende Mantelfläche und die Stützstruktur eine bezüglich der Setzachse radial nach innen weisende Stützfläche, welche an der Mantelfläche flächig anliegt, aufweist, wobei die Vorspannkraft von der Stützfläche auf die Mantelfläche übertragen wird.

Bevorzugt sind die Mantelfläche und die Stützfläche zylindrisch, besonders bevorzugt kreiszylindrisch. Ebenfalls bevorzugt sind die Mantelfläche und die Stützfläche kegelförmig. Besonders bevorzugt verjüngen sich die Mantelfläche und die Stützfläche in einer von dem Eintreibelement abgewandten Richtung. Ebenfalls besonders bevorzugt weist die Kegelform der Mantelfläche und der Stützfläche einen Kegelöffnungswinkel von höchstens 90°, bevorzugt höchstens 60° auf. Ebenfalls besonders bevorzugt umfasst das Setzgerät eine Spannvorrichtung, welche die Stützstruktur bezüglich der Setzachse axial gegen den weichmagnetischen Rahmen vorspannt.

Eine vorteilhafte Ausführungsform ist dadurch gekennzeichnet, dass ein Material der Stützstruktur ein Metall oder eine Legierung, bevorzugt Stahl umfasst. Bevorzugt besteht das Material der Stützstruktur aus dem Metall beziehungsweise der Legierung.

Eine vorteilhafte Ausführungsform ist dadurch gekennzeichnet, dass ein Material der Stützstruktur Keramik umfasst. Bevorzugt besteht das Material der Stützstruktur aus Keramik.

Eine vorteilhafte Ausführungsform ist dadurch gekennzeichnet, dass ein Material der Stützstruktur einen bevorzugt faserverstärkten Kunststoff umfasst. Bevorzugt besteht das Material der Stützstruktur aus dem Kunststoff.

In den Zeichnungen ist die Erfindung in mehreren Ausführungsbeispielen dargestellt.

Es zeigen:
- Fig. 1: ein Setzgerät in einem Längsschnitt,
- Fig. 2: ausschnittsweise ein Setzgerät in einem Längsschnitt und einem Querschnitt,
- Fig. 3: ausschnittsweise ein Setzgerät in einem Längsschnitt und einem Querschnitt,
- Fig. 4: eine Stützstruktur in einer Seitenansicht und einer Aufsicht,
- Fig. 5: ausschnittsweise ein Setzgerät in einem Längsschnitt und einem Querschnitt und
- Fig. 6: eine Stützstruktur in einem Längsschnitt.

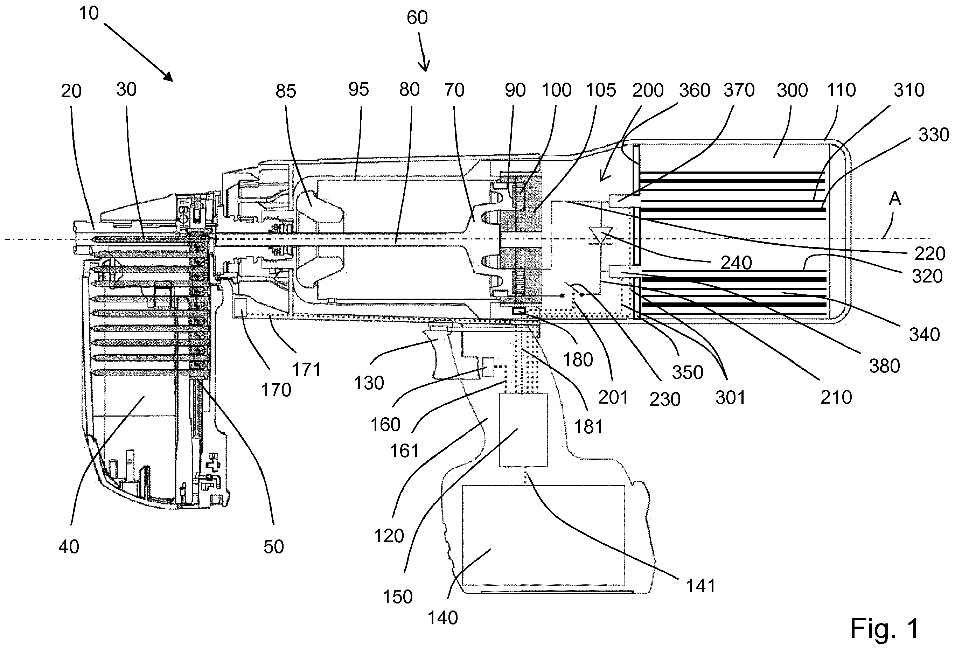

In Fig. 1 ist ein handgeführtes Setzgerät 10 zum Eintreiben von Befestigungselementen in einen nicht gezeigten Untergrund dargestellt. Das Setzgerät 10 weist eine als Bolzenführung ausgebildete Aufnahme 20 auf, in welcher ein als Nagel ausgebildetes Befestigungselement 30 aufgenommen ist, um entlang einer Setzachse A in den Untergrund eingetrieben zu werden (in Fig. 1 nach links). Für eine Zuführung von Befestigungselementen zu der Aufnahme umfasst das Setzgerät 10 ein Magazin 40, in welchem die Befestigungselemente einzeln oder in Form eines Befestigungselementestreifens 50 magaziniert aufgenommen sind und nach und nach in die Aufnahme 20 transportiert werden. Das Magazin 40 weist dafür ein nicht näher bezeichnetes federbeaufschlagtes Vorschubelement auf. Das Setzgerät 10 weist ein Eintreibelement 60 auf, welches einen Kolbenteller 70 und eine Kolbenstange 80 umfasst. Das Eintreibelement 60 ist dafür vorgesehen, das Befestigungselement 30 aus der Aufnahme 20 heraus entlang der Setzachse A in den Untergrund zu befördern. Hierbei ist das Eintreibelement 60 mit seinem Kolbenteller 70 in einem Führungszylinder 95 entlang der Setzachse A geführt.

Das Eintreibelement 60 wird seinerseits von einem Antrieb angetrieben, welcher einen an dem Kolbenteller 70 angeordneten Kurzschlussläufer 90, eine Erregerspule 100, einen weichmagnetischen Rahmen 105, einen Schaltkreislauf 200 und einen Kondensator 300 mit einem Innenwiderstand von 5 mOhm umfasst. Der Kurzschlussläufer 90 besteht aus einem bevorzugt ringförmigen, besonders bevorzugt kreisringförmigen Element mit einem geringen elektrischen Widerstand, beispielsweise aus Kupfer, und ist auf der von der Aufnahme 20 abgewandten Seite des Kolbentellers 70 an dem Kolbenteller 70 befestigt, beispielsweise verlötet, verschweisst, verklebt, geklemmt oder formschlüssig verbunden. Bei nicht gezeigten Ausführungsbeispielen ist der Kolbenteller selbst als Kurzschlussläufer ausgebildet. Der Schaltkreislauf 200 ist dafür vorgesehen, eine elektrische Schnellentladung des zuvor aufgeladenen Kondensators 300 herbeizuführen und den dabei fliessenden Entladestrom durch die Erregerspule 100 zu leiten, welche in dem Rahmen 105 eingebettet ist. Der Rahmen weist bevorzugt eine Sättigungsflussdichte von mindestens 1,0 T und/oder eine effektive spezifische elektrische Leitfähigkeit von höchstens 10⁶ S/m auf, so dass ein von der Erregerspule 100 erzeugtes Magnetfeld von dem Rahmen 105 verstärkt und Wirbelströme in dem Rahmen 105 unterdrückt werden.

In einer setzbereiten Position des Eintreibelements 60 (Fig. 1) taucht das Eintreibelement 60 mit dem Kolbenteller 70 so in eine nicht näher bezeichnete ringförmige Vertiefung des Rahmens 105 ein, dass der Kurzschlussläufer 90 in geringem Abstand gegenüber der Erregerspule 100 angeordnet ist. Dadurch durchsetzt ein Erregermagnetfeld, welches durch eine Änderung eines durch die Erregerspule fliessenden elektrischen Erregerstroms erzeugt wird, den Kurzschlussläufer 90 und induziert in dem Kurzschlussläufer 90 seinerseits einen ringförmig umlaufenden elektrischen Sekundärstrom. Dieser sich aufbauende und damit sich ändernde Sekundärstrom erzeugt wiederum ein Sekundärmagnetfeld, welches dem Erregermagnetfeld entgegengesetzt ist, wodurch der Kurzschlussläufer 90 eine von der Erregerspule 100 abstossende Lorentz-Kraft erfährt, welche das Eintreibelement 60 auf die Aufnahme 20 sowie das darin aufgenommene Befestigungselement 30 zu antreibt.

Das Setzgerät 10 umfasst weiterhin ein Gehäuse 110, in welchem der Antrieb aufgenommen ist, einen Griff 120 mit einem als Abzug ausgebildeten Betätigungselement 130, einen als Akkumulator ausgebildeten elektrischen Energiespeicher 140, eine Steuereinheit 150, einen Auslöseschalter 160, einen Anpressschalter 170, ein als an dem Rahmen 105 angeordneter Temperatursensor 180 ausgebildetes Mittel zur Erfassung einer Temperatur der Erregerspule 100 und elektrische Verbindungsleitungen 141, 161, 171, 181, 201, 301, welche die Steuereinheit 150 mit dem elektrischen Energiespeicher 140, dem Auslöseschalter 160, dem Anpressschalter 170, dem Temperatursensor 180, dem Schaltkreislauf 200 beziehungsweise dem Kondensator 300 verbinden. Bei nicht gezeigten Ausführungsbeispielen wird das Setzgerät 10 anstelle des elektrischen Energiespeichers 140 oder zusätzlich zu dem elektrischen Energiespeicher 140 mittels eines Netzkabels mit elektrischer Energie versorgt. Die Steuereinheit umfasst elektronische Bauteile, vorzugsweise auf einer Platine miteinander zu einem oder mehreren Steuerstromkreisen verschaltet, insbesondere einen oder mehrere Mikroprozessoren.

Wenn das Setzgerät 10 an einen nicht gezeigten Untergrund (in Fig. 1 links) angepresst wird, betätigt ein nicht näher bezeichnetes Anpresselement den Anpressschalter 170, welcher dadurch mittels der Verbindungsleitung 171 ein Anpresssignal an die Steuereinheit 150 überträgt. Davon ausgelöst leitet die Steuereinheit 150 einen Kondensator-Aufladevorgang ein, bei welchem elektrische Energie mittels der Verbindungsleitung 141 von dem elektrischen Energiespeicher 140 zu der Steuereinheit 150 und mittels der Verbindungsleitungen 301 von der Steuereinheit 150 zu dem Kondensator 300 geleitet wird, um den Kondensator 300 aufzuladen. Die Steuereinheit 150 umfasst hierzu einen nicht näher bezeichneten Schaltwandler, welcher den elektrischen Strom aus dem elektrischen Energiespeicher 140 in einen geeigneten Ladestrom für den Kondensator 300 umwandelt. Wenn der Kondensator 300 aufgeladen und das Eintreibelement 60 in seiner in Fig. 1 dargestellten setzbereiten Position ist, befindet sich das Setzgerät 10 in einem setzbereiten Zustand. Dadurch, dass die Aufladung des Kondensators 300 erst durch das Anpressen des Setzgeräts 10 an den Untergrund bewirkt wird, ist zur Erhöhung der Sicherheit von umstehenden Personen ein Setzvorgang nur dann ermöglicht, wenn das Setzgerät 10 an den Untergrund angepresst ist. Bei nicht gezeigten Ausführungsbeispielen leitet die Steuereinheit den Kondensator-Aufladevorgang bereits bei einem Einschalten des Setzgeräts oder bei einem Abheben des Setzgeräts von dem Untergrund oder bei Beendigung eines vorausgegangenen Eintreibvorgangs ein.

Wenn bei setzbereitem Setzgerät 10 das Betätigungselement 130 betätigt wird, beispielsweise durch Ziehen mit dem Zeigefinger der Hand, welche den Griff 120 umgreift, betätigt das Betätigungselement 130 den Auslöseschalter 160, welcher dadurch mittels der Verbindungsleitung 161 ein Auslösesignal an die Steuereinheit 150 überträgt. Davon ausgelöst leitet die Steuereinheit 150 einen Kondensator-Entladevorgang ein, bei dem in dem Kondensator 300 gespeicherte elektrische Energie mittels des Schaltkreislaufs 200 von dem Kondensator 300 zu der Erregerspule 100 geleitet wird, indem der Kondensator 300 entladen wird.

Der in Fig. 1 schematisch dargestellte Schaltkreislauf 200 umfasst hierzu zwei Entladeleitungen 210, 220, welche den Kondensator 300 mit der Erregerspule 200 verbinden und von denen zumindest eine Entladeleitung 210 von einem normalerweise geöffneten Entladeschalter 230 unterbrochen ist. Der Schaltkreislauf 200 bildet mit der Erregerspule 100 und dem Kondensator 300 einen elektrischen Schwingkreis. Ein Hin- und Herschwingen dieses Schwingkreises und/oder ein negatives Aufladen des Kondensators 300 wirkt sich unter Umständen negativ auf einen Wirkungsgrad des Antriebs aus, lässt sich aber mit Hilfe einer Freilaufdiode 240 unterbinden. Die Entladeleitungen 210, 220 sind mittels an einer der Aufnahme 20 zugewandten Stirnseite 360 des Kondensators 300 angeordneter elektrischer Kontakte 370, 380 des Kondensators 300 elektrisch mit jeweils einer Elektrode 310, 320 des Kondensators 300 verbunden, beispielsweise durch Verlöten, Verschweissen, Verschrauben, Verklemmen oder Formschluss. Der Entladeschalter 230 eignet sich vorzugsweise zum Schalten eines Entladestroms mit hoher Stromstärke und ist beispielsweise als Thyristor ausgebildet. Ausserdem haben die Entladeleitungen 210, 220 einen geringen Abstand zueinander, damit ein von ihnen induziertes parasitäres Magnetfeld möglichst gering ist. Beispielsweise sind die Entladeleitungen 210, 220 zu einer Sammelschiene ("Bus Bar") zusammengefasst und mit einem geeigneten Mittel, beispielsweise einem Halter oder einer Klammer, zusammengehalten. Bei nicht gezeigten Ausführungsbeispielen ist die Freilaufdiode elektrisch parallel zu dem Entladeschalter geschaltet. Bei weiteren nicht gezeigten Ausführungsbeispielen ist keine Freilaufdiode in dem Schaltkreis vorgesehen.

Zur Einleitung des Kondensator-Entladevorgangs schliesst die Steuereinheit 150 mittels der Verbindungsleitung 201 den Entladeschalter 230, wodurch ein Entladestrom des Kondensators 300 mit hoher Stromstärke durch die Erregerspule 100 fliesst. Der schnell ansteigende Entladestrom induziert ein Erregermagnetfeld, welches den Kurzschlussläufer 90 durchsetzt und in dem Kurzschlussläufer 90 seinerseits einen ringförmig umlaufenden elektrischen Sekundärstrom induziert. Dieser sich aufbauende Sekundärstrom erzeugt wiederum ein Sekundärmagnetfeld, welches dem Erregermagnetfeld entgegengesetzt ist, wodurch der Kurzschlussläufer 90 eine von der Erregerspule 100 abstossende Lorentz-Kraft erfährt, welche das Eintreibelement 60 auf die Aufnahme 20 sowie das darin aufgenommene Befestigungselement 30 zu antreibt. Sobald die Kolbenstange 80 des Eintreibelements 60 auf einen nicht näher bezeichneten Kopf des Befestigungselements 30 trifft, wird das Befestigungselement 30 von dem Eintreibelement 60 in den Untergrund eingetrieben. Überschüssige Bewegungsenergie des Eintreibelements 60 wird von einem Bremselement 85 aus einem federelastischen und/oder dämpfenden Material, beispielsweise Gummi, aufgenommen, indem sich das Eintreibelement 60 mit dem Kolbenteller 70 gegen das Bremselement 85 bewegt und von diesem bis zu einem Stillstand abgebremst wird. Danach wird das Eintreibelement 60 von einer nicht näher bezeichneten Rückstellvorrichtung in die setzbereite Position zurückgestellt.

Der Kondensator 300, insbesondere sein Schwerpunkt, ist auf der Setzachse A hinter dem Eintreibelement 60 angeordnet, wohingegen die Aufnahme 20 vor dem Eintreibelement 60 angeordnet ist. In Bezug auf die Setzachse A ist der Kondensator 300 also axial versetzt zu dem Eintreibelement 60 und radial überlappend mit dem Eintreibelement 60 angeordnet. Dadurch lässt sich einerseits eine geringe Länge der Entladeleitungen 210, 220 verwirklichen, wodurch sich deren Widerstände reduzieren und damit ein Wirkungsgrad des Antriebs erhöhen lässt. Andererseits lässt sich ein geringer Abstand eines Schwerpunkts des Setzgeräts 10 zur Setzachse A verwirklichen. Dadurch sind Kippmomente bei einem Rückstoss des Setzgeräts 10 während eines Eintreibvorgangs gering. Bei einem nicht gezeigten Ausführungsbeispiel ist der Kondensator um das Eintreibelement herum angeordnet.

Die Elektroden 310, 320 sind auf einander gegenüberliegenden Seiten an einer um eine Wickelachse aufgewickelten Trägerfolie 330 angeordnet, beispielsweise durch Metallisierung der Trägerfolie 330, insbesondere aufgedampft, wobei die Wickelachse mit der Setzachse A zusammenfällt. Bei nicht gezeigten Ausführungsbeispielen ist die Trägerfolie mit den Elektroden so um die Wickelachse gewickelt, dass ein Durchlass entlang der Wickelachse verbleibt. Insbesondere in diesem Fall ist der Kondensator beispielsweise um die Setzachse herum angeordnet. Die Trägerfolie 330 weist bei einer Ladespannung des Kondensators 300 von 1500 V eine Foliendicke zwischen 2,5 µm und 4,8 µm, bei einer Ladespannung des Kondensators 300 von 3000 V eine Foliendicke von beispielesweise 9,6 µm auf. Bei nicht gezeigten Ausführungsbeispielen ist die Trägerfolie ihrerseits aus zwei oder mehr übereinandergeschichteten Einzelfolien zusammengesetzt. Die Elektroden 310, 320 weisen einen Schichtwiderstand von 50 Ohm/□ auf.

Eine Oberfläche des Kondensators 300 hat die Form eines Zylinders, insbesondere Kreiszylinders, dessen Zylinderachse mit der Setzachse A zusammenfällt. Eine Höhe dieses Zylinders in Richtung der Wickelachse ist im Wesentlichen so gross wie sein senkrecht zur Wickelachse gemessener Durchmesser. Durch ein geringes Verhältnis von Höhe zu Durchmesser des Zylinders werden ein geringer Innenwiderstand bei relativ hoher Kapazität des Kondensators 300 und nicht zuletzt eine kompakte Bauweise des Setzgeräts 10 erreicht. Ein geringer Innenwiderstand des Kondensators 300 wird auch durch einen grossen Leitungsquerschnitt der Elektroden 310, 320 erreicht, insbesondere durch eine hohe Schichtdicke der Elektroden 310, 320, wobei die Auswirkungen der Schichtdicke auf einen Selbstheilungseffekt und/oder eine Lebensdauer des Kondensators 300 zu berücksichtigen sind.

Der Kondensator 300 ist mittels eines Dämpfelements 350 gedämpft an dem übrigen Setzgerät 10 gelagert. Das Dämpfelement 350 dämpft Bewegungen des Kondensators 300 relativ zum übrigen Setzgerät 10 entlang der Setzachse A. Das Dämpfelement 350 ist an der Stirnseite 360 des Kondensators 300 angeordnet und bedeckt die Stirnseite 360 vollständig. Dadurch werden die einzelnen Wicklungen der Trägerfolie 330 von einem Rückstoss des Setzgeräts 10 gleichmässig belastet. Die elektrischen Kontakte 370, 380 ragen dabei von der Stirnfläche 360 ab und durchdringen das Dämpfelement 350. Das Dämpfelement 350 weist zu diesem Zweck jeweils eine Freistellung auf, durch welche die elektrischen Kontakte 370, 380 hindurchragen. Die Verbindungsleitungen 301 weisen zum Ausgleich von Relativbewegungen zwischen dem Kondensator 300 und dem übrigen Setzgerät 10 jeweils eine nicht näher dargestellte Entlastungs- und/oder Dehnungsschlaufe auf. Bei nicht gezeigten Ausführungsbeispielen ist ein weiteres Dämpfelement an dem Kondensator angeordnet, beispielsweise an dessen von der Aufnahme abgewandten Stirnseite. Bevorzugt ist der Kondensator dann zwischen zwei Dämpfelementen eingespannt, dass heisst die Dämpfelemente liegen mit einer Vorspannung an dem Kondensator an. Bei weiteren nicht gezeigten Ausführungsbeispielen weisen die Verbindungsleitungen eine Steifigkeit auf, welche mit zunehmendem Abstand vom Kondensator kontinuierlich abnimmt.

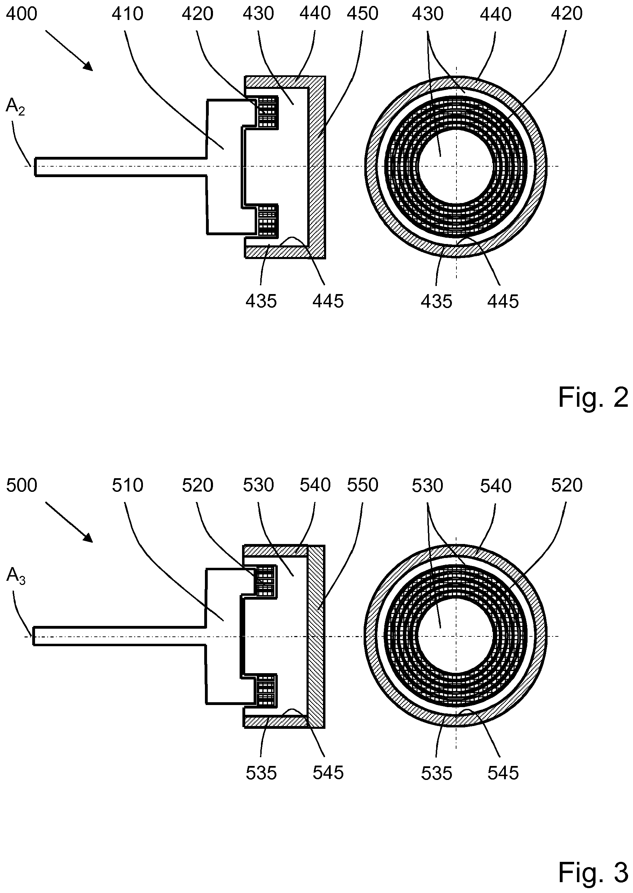

In Fig. 2 ist ein Setzgerät 400 ausschnittsweise in einem Längsschnitt (in Fig. 2 links) und einem Querschnitt (in Fig. 2 rechts) dargestellt. Das Setzgerät 400 weist ein Eintreibelement 410 auf, welches von einem Antrieb angetrieben wird, welcher eine Erregerspule 420 und einen weichmagnetischen Rahmen 430 umfasst. Die Erregerspule 420 ist dabei bevorzugt spielfrei in den Rahmen 430 eingebettet. In einer setzbereiten Position des Eintreibelements 410 taucht das Eintreibelement 410 in eine nicht näher bezeichnete ringförmige Vertiefung des Rahmens 430 ein. Wird nun die Erregerspule 420 mit elektrischem Strom durchflossen, beispielsweise aufgrund einer Entladung eines Kondensators, wird das Eintreibelement von der Spule abgestossen und entlang einer Setzachse A₂ (in Fig. 2 nach links) beschleunigt, um einen Eintreibvorgang durchzuführen. Dabei wirken auch Kräfte auf die Erregerspule 420, welche bezüglich der Setzachse A₂ radial nach aussen gerichtet sind. Um den Rahmen 430, insbesondere einen radial äusseren Bereich des Rahmens 430, gegenüber solchen Kräften abzustützen, weist das Setzgerät 400 eine Stützstruktur 440 auf, welche an einem bezüglich der Setzachse A₂ äusseren Umfang des Rahmens 430 den Rahmen 430 umschliesst.

Die Stützstruktur 440 übt zumindest während des Stromflusses durch die Erregerspule 420 eine bezüglich der Setzachse A₂ radial nach innen gerichtete Vorspannkraft auf den weichmagnetischen Rahmen 430 aus. Die Vorspannkraft wirkt dabei innerhalb einer Ebene senkrecht zur Setzachse A₂ von allen Seiten radial nach innen auf den weichmagnetischen Rahmen 430. Zu diesem Zweck weist der Rahmen 430 eine bezüglich der Setzachse A₂ radial nach aussen weisende Mantelfläche 435 und die Stützstruktur 440 eine bezüglich der Setzachse A₂ radial nach innen weisende Stützfläche 445 auf. Die Stützfläche 445 liegt an der Mantelfläche 435 flächig an, so dass die Vorspannkraft von der Stützfläche 445 auf die Mantelfläche 435 übertragen wird. Die Mantelfläche 435 und die Stützfläche 445 haben eine kreiszylindrische Form. Die Stützstruktur 440 weist einen stirnseitigen Endbereich 450 auf, welcher in Richtung der Setzachse A₂ eine Vorspannkraft auf den Rahmen 430 ausübt. Der stirnseitige Endbereich 450 ist einstückig mit der übrigen Stützstruktur 440 ausgestaltet.

Die Stützstruktur 440 besteht aus Stahl oder Keramik und wird mit einer Aussparung hergestellt, in welche der Rahmen 430 mit der Erregerspule 420 eingesetzt wird. Die Aussparung hat gegenüber dem Rahmen 430 ein geringes Untermass, so dass die Stützstruktur 440 während des Einsetzens oder Einpressens oder thermischen Fügens des Rahmens 430 bezüglich der Setzachse A₂ in umlaufender Richtung elastisch gedehnt wird. Diese elastische Dehnung bewirkt die Vorspannkraft. Bei nicht gezeigten Ausführungsbeispielen besteht die Stützstruktur aus Kunststoff und ist beispielsweise mittels eines Spritzgussverfahrens hergestellt. Bevorzugt enthält der Kunststoff Verstärkungsfasern aus Kohlenstoff oder Glas. Bei einem besonders bevorzugten Herstellungsverfahren werden Langfasern um den Rahmen gewickelt, vorgespannt und im gespannten Zustand umspritzt. Nach einer Aushärtung hält der Werkstoff den vorgespannten Zustand der Langfasern und damit die auf den Rahmen ausgeübte Vorspannkraft aufrecht. Bei weiteren nicht gezeigten Ausführungsbeispielen ist der weichmagnetische Rahmen mehrteilig ausgeführt, beispielsweise aus mehreren Kreissegmenten bestehend.

In Fig. 3 ist ein Setzgerät 500 ausschnittsweise in einem Längsschnitt (in Fig. 3 links) und einem Querschnitt (in Fig. 3 rechts) dargestellt. Das Setzgerät 500 weist ein Eintreibelement 510 sowie einen Antrieb mit einer Erregerspule 520 und einem weichmagnetischen Rahmen 530 auf. Ausserdem umfasst das Setzgerät 500 eine Stützstruktur 540, welche eine Stützfläche 545 aufweist. Die Stützfläche 545 liegt an einer Mantelfläche 535 des Rahmens 530 an, so dass die Stützstruktur 540 den Rahmen 530 umschliesst.

Die Stützstruktur 540 übt eine bezüglich einer Setzachse A₃ radial nach innen gerichtete Vorspannkraft auf den weichmagnetischen Rahmen 530 aus. Die Stützstruktur 540 weist einen stirnseitigen Endbereich 550 auf, welcher in Richtung der Setzachse A₃ eine Vorspannkraft auf den Rahmen 530 ausübt. Der stirnseitige Endbereich 550 ist als separates Element mit der übrigen Stützstruktur 540 verbunden.

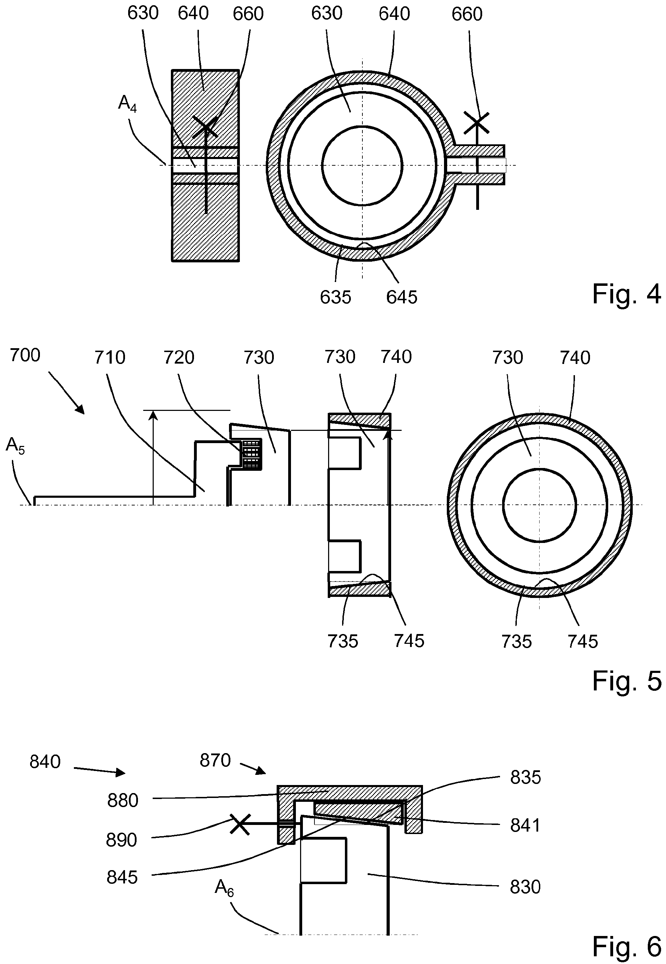

In Fig. 4 ist eine Stützstruktur 640 mit einer Setzachse A₄ in einer Seitenansicht (in Fig. 4 links) und einer Aufsicht (in Fig. 4 rechts) dargestellt. Die Stützstruktur 640 ist nach Art einer Rohrschelle ausgebildet und umschliesst einen weichmagnetischen Rahmen 630. Die Stützstruktur ist mittels eines als Schraube ausgebildeten Spannelements 660 unter Bildung einer Vorspannkraft um den Rahmen 630 gespannt. Eine Stützfläche 645 der Stützstruktur 640 liegt an einer Mantelfläche 635 des Rahmens 630 an, so dass die Vorspannkraft von der Stützfläche 645 auf die Mantelfläche 635 übertragen wird.

In Fig. 5 ist ein Setzgerät 700 ausschnittsweise in einem Längsschnitt (in Fig. 5 Mitte und links) und einem Querschnitt (in Fig. 5 rechts) dargestellt. Das Setzgerät 700 weist ein Eintreibelement 710 sowie einen Antrieb mit einer Erregerspule 720 und einem weichmagnetischen Rahmen 730 auf. Ausserdem umfasst das Setzgerät 700 eine Stützstruktur 740, welche eine Stützfläche 745 aufweist. Die Stützfläche 745 liegt an einer Mantelfläche 735 des Rahmens 730 an, so dass die Stützstruktur 740 den Rahmen 730 umschliesst. Die Stützstruktur 740 übt eine bezüglich einer Setzachse A₅ radial nach innen gerichtete Vorspannkraft auf den weichmagnetischen Rahmen 730 aus.

Die Mantelfläche 735 und die Stützfläche 745 verjüngen sich kegelförmig in einer von dem Eintreibelement 710 abgewandten Richtung, so dass Abstossungskräfte, welche auf die Erregerspule 720 und damit auf den Rahmen 730 wirken, die Vorspannkraft zwischen der Mantelfläche 735 und der Stützfläche 745 verstärken. Die Kegelform der Mantelfläche 735 und der Stützfläche 745 weist einen Kegelöffnungswinkel von beispielsweise 20° auf.

In Fig. 6 ist eine Stützstruktur 840 in einem Längsschnitt dargestellt. Die Stützstruktur 840 weist ein Stützelement 841 mit einer Stützfläche 845 auf, welche an einer Mantelfläche 835 eines Rahmens 830 anliegt. Die Mantelfläche 835 und die Stützfläche 845 sind kegelförmig ausgebildet. Die Stützstruktur umfasst weiterhin eine Spannvorrichtung 870 mit einer Klammer 880 und einem als Schraube ausgebildeten Klemmelement 890. Die Spannvorrichtung 870 spannt die Stützstruktur 840 bezüglich einer Setzachse A₆ axial gegen den Rahmen 830 vor, indem der Rahmen 830 und das Stützelement 841 zwischen dem Klemmelement 890 und der Klammer 880 eingeklemmt werden. Diese Klemmkraft erzeugt eine Vorspannkraft zwischen der Mantelfläche 835 und der Stützfläche 845, so dass der Rahmen 830 gegenüber radial nach aussen wirkenden Kräften abgestützt ist.

Die Erfindung wurde anhand einer Reihe von in den Zeichnungen dargestellten und nicht dargestellten Ausführungsbeispielen beschrieben. Die einzelnen Merkmale der verschiedenen Ausführungsbeispiele sind einzeln oder in beliebiger Kombination miteinander anwendbar, soweit sie sich nicht widersprechen. Es wird darauf hingewiesen, dass das erfindungsgemässe Setzgerät auch für andere Anwendungen einsetzbar ist.

## Patentansprüche

1. Setzgerät zum Eintreiben von Befestigungselementen in einen Untergrund, insbesondere handgeführtes Setzgerät, aufweisend eine Aufnahme, welche dafür vorgesehen ist, ein Befestigungselement aufzunehmen, ein Eintreibelement, welches dafür vorgesehen ist, ein in der Aufnahme aufgenommenes Befestigungselement entlang einer Setzachse in den Untergrund zu befördern, einen Antrieb, welcher dafür vorgesehen ist, das Eintreibelement entlang der Setzachse auf das Befestigungselement zu anzutreiben, wobei der Antrieb einen elektrischen Kondensator, einen an dem Eintreibelement angeordneten Kurzschlussläufer und eine Erregerspule aufweist, welche bei einer Entladung des Kondensators mit Strom durchflossen wird und ein Magnetfeld erzeugt, welches das Eintreibelement auf das Befestigungselement zu beschleunigt, wobei das Setzgerät weiterhin einen weichmagnetischen Rahmen, in welchen die Erregerspule eingebettet ist, und eine Stützstruktur umfasst, wobei die Stützstruktur zumindest während der Entladung des Kondensators eine bezüglich der Setzachse radial nach innen gerichtete Vorspannkraft auf den weichmagnetischen Rahmen ausübt.

2. Setzgerät nach Anspruch 1, wobei die Stützstruktur innerhalb einer Ebene senkrecht zur Setzachse von allen Seiten eine Vorspannkraft auf den weichmagnetischen Rahmen ausübt.

3. Setzgerät nach einem der vorhergehenden Ansprüche, wobei die Stützstruktur in Richtung der Setzachse eine Vorspannkraft auf den weichmagnetischen Rahmen ausübt.

4. Setzgerät nach einem der vorhergehenden Ansprüche, wobei die Stützstruktur den weichmagnetischen Rahmen im Wesentlichen umschliesst.

5. Setzgerät nach Anspruch 4, wobei die Stützstruktur bezüglich der Setzachse in umlaufender Richtung elastisch gedehnt ist, insbesondere durch ein Einsetzen des weichmagnetischen Rahmens in eine Aussparung der Stützstruktur.

6. Setzgerät nach einem der vorhergehenden Ansprüche, wobei die Stützstruktur an den weichmagnetischen Rahmen angeformt ist.

7. Setzgerät nach einem der vorhergehenden Ansprüche, wobei der weichmagnetische Rahmen eine bezüglich der Setzachse radial nach aussen weisende Mantelfläche und die Stützstruktur eine bezüglich der Setzachse radial nach innen weisende Stützfläche, welche an der Mantelfläche flächig anliegt, aufweist, und wobei die Vorspannkraft von der Stützfläche auf die Mantelfläche übertragen wird.

8. Setzgerät nach Anspruch 7, wobei die Mantelfläche und die Stützfläche zylindrisch, insbesondere kreiszylindrisch, sind.

9. Setzgerät nach Anspruch 7, wobei die Mantelfläche und die Stützfläche kegelförmig sind.

10. Setzgerät nach Anspruch 9, wobei sich die Mantelfläche und die Stützfläche in einer von dem Eintreibelement abgewandten Richtung verjüngen.

11. Setzgerät nach einem der Ansprüche 9 bis 10, wobei die Kegelform der Mantelfläche und der Stützfläche einen Kegelöffnungswinkel von höchstens 90°, insbesondere höchstens 60° aufweist.

12. Setzgerät nach einem der Ansprüche 9 bis 11, wobei das Setzgerät eine Spannvorrichtung umfasst, welche die Stützstruktur bezüglich der Setzachse axial gegen den weichmagnetischen Rahmen vorspannt.

13. Setzgerät nach einem der vorhergehenden Ansprüche, wobei ein Material der Stützstruktur ein Metall oder eine Legierung, insbesondere Stahl umfasst, insbesondere daraus besteht.

14. Setzgerät nach einem der vorhergehenden Ansprüche, wobei ein Material der Stützstruktur Keramik umfasst, insbesondere daraus besteht.

15. Setzgerät nach einem der vorhergehenden Ansprüche, wobei ein Material der Stützstruktur einen insbesondere faserverstärkten Kunststoff umfasst, insbesondere daraus besteht.
